# FASCICULE DE BREVET EUROPEEN

(11) **EP 1 679 469 B1**
(45) Date de publication et mention de la délivrance du brevet: **14.03.2012**
(21) Numéro de dépôt: 06290017.0
(22) Date de dépôt: 05.01.2006
(51) Int. Cl.: F21S 8/00, B60Q 1/00, B60Q 11/00

(54) **Dispositif de signalisation lumineux**
Lichtsignalgerät
Light signalling device

(30) Priorité: 06.01.2005 FR 0500115
(43) Date de publication de la demande: 12.07.2006
(73) Titulaire: ECE, 75020 Paris (FR)
(72) Inventeur: Ewig, Pascal, 75020 Paris (FR); Valire, Jérôme, 93110 Rosny sous bois (FR)
(74) Mandataire: de Kernier, Gabriel

(56) Documents cités:
- EP-A- 0 935 145
- EP-A- 1 156 271
- WO-A-98/54030
- US-B1- 6 495 964

## Description

La présente invention concerne un dispositif de signalisation lumineux et, en particulier, un dispositif de signalisation destiné à être monté sur un aéronef.

La présente invention concerne plus particulièrement un dispositif de signalisation lumineux comprenant une pluralité d'éléments lumineux montés sur un support et entourés d'un capot translucide ou transparent à la lumière.

On connaît, par le document FR-A-2 339 922, un dispositif de signalisation lumineux comprenant un réseau de diodes électroluminescentes placées sur un support et un capot translucide recouvrant lesdites diodes. Le capot peut être pourvu de reliefs associés à chacune des diodes, de manière à assurer une déviation des rayons lumineux issus de chacune d'elles et, de manière générale, à mettre en forme le rayonnement émis conjointement par les diodes.

Le document EP 0 935 145 décrit un dispositif de signalisation lumineux pour feux de signalisation pourvu d'une carte de circuit imprimé sur laquelle sont montées, au niveau de sa face avant, des diodes électroluminescentes, d'une lentille de diffusion de la lumière émise par les diodes, d'une lentille intermédiaire montée entre la carte de circuit imprimé et la lentille de diffusion, d'un capot venant coiffer la carte imprimée, et d'un capteur photométrique positionné sur une face arrière de la carte imprimée.

L'utilisation des diodes électroluminescentes pour engendrer le rayonnement lumineux est avantageuse, dans la mesure où ces diodes présentent une durée de vie très supérieure à celle des lampes à incandescence. Toutefois, en cours d'utilisation et à courant constant, on observe une chute de l'intensité lumineuse moyenne des diodes.

Les dispositifs de signalisation pourvus de telles diodes présentent cependant des inconvénients majeurs, liés au fait que certaines réglementations, et en particulier lés réglementations FAR (« Federal Aviation Regulations », en langue anglaise) imposent des exigences particulières relatives aux caractéristiques du faisceau lumineux émis, notamment en termes d'intensité.

Par conséquent, de tels dispositifs de signalisation peuvent être inappropriés pour constituer des dispositifs de signalisation montés à bord d'un aéronef, l'intensité lumineuse du rayonnement émis pouvant, au cours du temps, devenir inférieure aux minima requis par les réglementations.

La présente invention vise à remédier à cet inconvénient en proposant un dispositif de signalisation lumineux particulièrement économique et apte à indiquer une insuffisance de l'intensité lumineuse émise.

A cet effet, le dispositif de signalisation lumineux, notamment destiné à être monté à bord d'un aéronef, comprend une pluralité d'éléments lumineux montés sur une face avant d'un support et entourés d'un capot translucide. Selon un aspect de l'invention, le dispositif de signalisation comprend un moyen de réflexion de la lumière émise par les éléments lumineux disposé à proximité des éléments lumineux, au moins un capteur photométrique positionné entre le support et le moyen de réflexion, et un moyen de comparaison relatif d'une intensité lumineuse détectée par le capteur photométrique avec une intensité lumineuse de référence. Le capteur photométrique est positionné sur la face avant du support de façon adjacente aux éléments lumineux. Le moyen de réflexion apte à réfléchir la lumière émise en direction du capteur photométrique permet également la transmission des rayons lumineux vers l'extérieur du dispositif.

Un tel dispositif de signalisation présente l'avantage de détecter l'intensité du rayonnement émis par les éléments lumineux et de pouvoir comparer ladite intensité avec une intensité lumineuse de référence en vue de détecter une éventuelle diminution de l'intensité du rayonnement émis, notamment pour s'assurer du respect des exigences imposées par certaines réglementations, lorsque le dispositif est destiné à être monté à bord d'un aéronef. Il devient ainsi possible de détecter une anomalie au niveau du fonctionnement des éléments lumineux du dispositif permettant d'accroître la sécurité des occupants de l'aéronef sur lequel le dispositif est monté.

Avantageusement, les éléments lumineux comprennent des diodes électroluminescentes. Lesdites diodes présentent une durée de vie relativement importante, et leur utilisation permet d'éviter la détérioration de l'ensemble des éléments lumineux lorsqu'un élément d'éclairage vient à ne plus fonctionner.

Dans un mode de réalisation, le moyen de réflexion est constitué par le capot translucide.

Un tel dispositif de signalisation lumineux présente l'avantage d'être particulièrement économique, compact et facile à monter. En effet, il n'est pas nécessaire de prévoir un élément spécifique de réflexion de la lumière émise par les éléments lumineux de manière à pouvoir détecter une éventuelle anomalie, un tel élément engendrant un surcoût et des difficultés de montage.

Dans un autre mode de réalisation, le moyen de réflexion est monté entre le capot translucide et le support.

La disposition du capteur photométrique sur le support de façon adjacente aux éléments lumineux accroît encore la compacité du dispositif. Le capteur photométrique peut comprendre un phototransistor ou une photodiode.

Dans un mode de réalisation, le moyen de comparaison est relié à une sortie de signal du capteur photométrique, le moyen de comparaison comprenant un filtre, un amplificateur et un comparateur.

Le dispositif peut comprendre, en outre, des moyens d'information de l'évolution de l'intensité lumineuse des éléments lumineux.

La présente invention concerne également un procédé de contrôle d'un dispositif de signalisation lumineux comprenant un ensemble de diodes électroluminescentes montées sur un support et recouvertes d'un capot translucide, dans lequel :
- on réfléchit la lumière émise par les diodes montées sur une face avant d'un support,
- on détecte un signal lumineux réfléchi par l'intermédiaire d'un capteur photométrique positionné sur la face avant du support de façon adjacente aux diodes, et
- on compare l'intensité lumineuse des diodes par rapport à une intensité lumineuse de référence.

Avantageusement, on filtre le signal lumineux réfléchi à la fréquence d'alimentation des diodes afin de comparer l'intensité lumineuse des diodes par rapport à l'intensité lumineuse de référence.

Dans un mode de mise en oeuvre préféré du procédé, on déclenche une alarme si l'intensité lumineuse est inférieure à l'intensité lumineuse de référence. On peut, en outre, déclencher l'alarme si l'intensité lumineuse est inférieure à l'intensité lumineuse de référence pendant une durée prédéterminée.

Dans un mode de réalisation, le dispositif de signalisation lumineux, notamment destiné à être monté à bord d'un aéronef, comprend une pluralité d'éléments lumineux montés sur un support et entourés d'un capot translucide, un moyen de réflexion de la lumière émise par les éléments lumineux disposé à proximité des éléments lumineux, au moins un capteur photométrique, et un moyen de comparaison relatif d'une intensité lumineuse détectée par le capteur photométrique avec une intensité lumineuse de référence. Le capteur photométrique est positionné sur le support de façon adjacente aux éléments lumineux, le moyen de réflexion apte à réfléchir la lumière émise en direction dudit capteur photométrique permettant également la transmission des rayons émis par les éléments lumineux vers l'extérieur du dispositif.

En d'autres termes, le dispositif selon l'invention comprend un capteur photométrique positionné sur le support sur la même face que celle où sont montés les éléments lumineux, et un unique moyen apte à réfléchir la lumière émise en direction dudit capteur photométrique et transmettre les rayons émis vers l'extérieur du dispositif.

Grâce à l'invention, il devient ainsi possible de s'affranchir de l'existence d'une surface réfléchissante supplémentaire à celle du moyen de réflexion en regard de la face arrière du support, ce qui permet notamment d'obtenir un dispositif de conception relativement simple, économique et présentant un encombrement réduit.

La présente invention sera mieux comprise à la lecture de la description détaillée d'un mode de réalisation pris à titre d'exemple nullement limitatif et illustré par les dessins annexés, sur lesquels :
- la figure 1 est une vue schématique d'un dispositif de signalisation conforme à l'invention ;
- la figure 2 est une vue de côté du dispositif de signalisation de la figure 1 ; et
- la figure 3 est une vue schématique d'un organe de traitement d'un signal émis par un élément du dispositif de la figure 1.

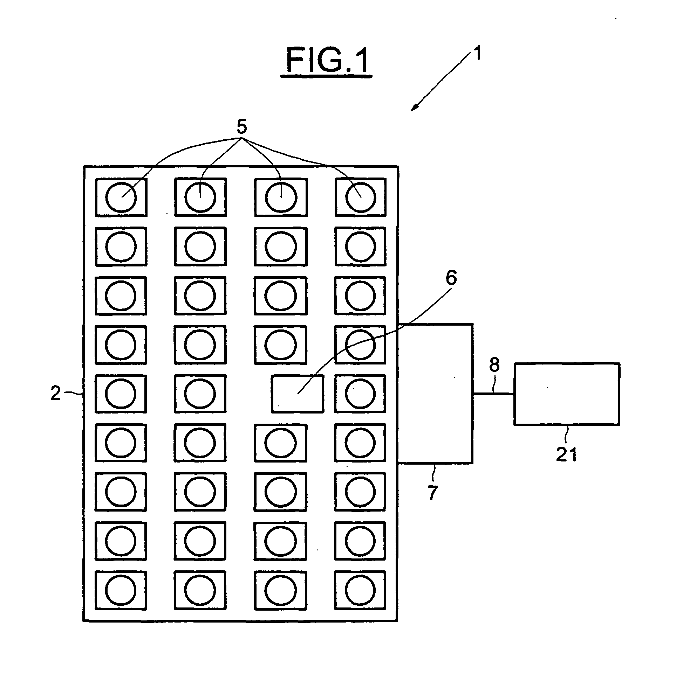

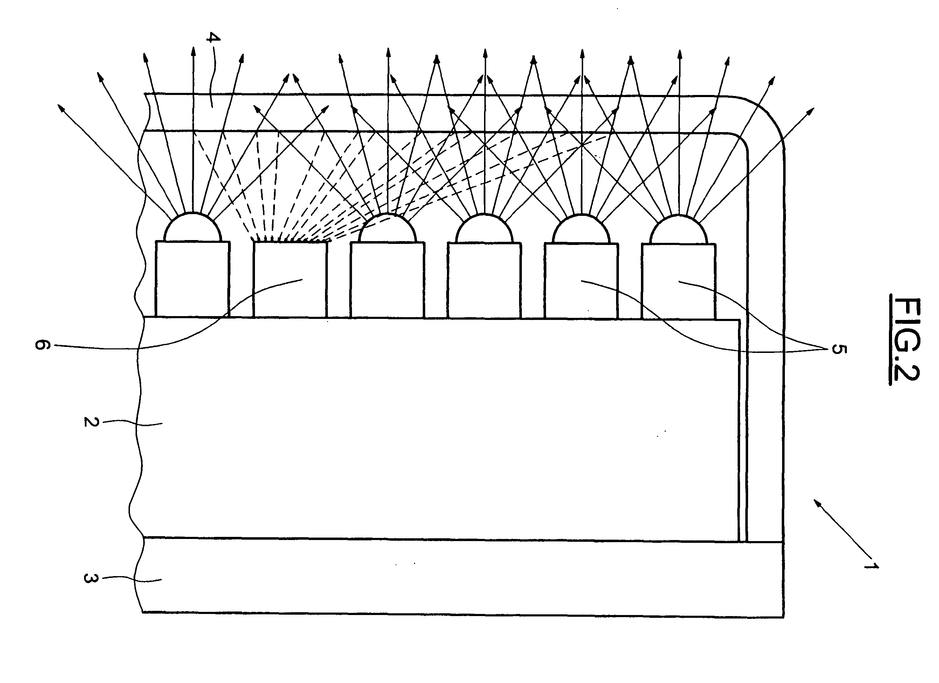

Sur les figures 1 et 2, on a représenté, de manière schématique, un dispositif de signalisation lumineux, référencé 1 dans son ensemble. Dans l'application considérée, le dispositif 1 est destiné à être monté à bord d'aéronef, par exemple un hélicoptère, et apte à émettre des signaux lumineux pour signaler la présence de l'aéronef sur lequel il est monté et constituer ainsi un dispositif de signalisation lumineux pouvant être utilisé pour une application du type feu de navigation.

Le dispositif 1 comprend ici un support 2, formant une plaque de forme générale rectangulaire, fixé au niveau de sa face arrière sur un socle 3 venant lui-même se monter sur l'aéronef. Le dispositif 1 comprend également un capot 4 rectangulaire, transparent ou translucide à la lumière, fixé à la périphérie du socle 3 et venant coiffer le support 2. Le capot est avantageusement réalisé en matière synthétique moulée, par exemple en poly(méthacrylate de méthyle) ou encore en polycarbonate.

Le dispositif 1 comprend également une pluralité d'éléments lumineux 5 disposés au niveau de la face avant du support 2, par exemple des diodes électroluminescentes, alimentés au moyen d'une source d'alimentation (non représentée). Par exemple, dans le cas d'une utilisation de diodes dites « blanches », les diodes peuvent présenter des angles radiaux d'émission, respectivement de 60 degrés et de 20 degrés selon les directions horizontale et verticale. Avec des diodes dites « vertes », les angles d'émission peuvent être respectivement de 20 degrés et de 30 degrés selon les directions horizontale et verticale, et avec des diodes dites « rouges », les angles d'émission peuvent être de 30 degrés dans les directions horizontale et verticale.

La source d'alimentation des éléments lumineux 5 est associée à un circuit électrique approprié pour délivrer aux éléments lumineux un signal d'alimentation, par exemple sous la forme de créneaux permettant une modulation de l'intensité lumineuse émise. A titre illustratif, une modulation temporelle de l'intensité lumineuse consistant à maintenir les éléments lumineux allumés pendant 2 ms puis éteintes pendant 0,5 ms peut être envisagée et permet d'obtenir une intensité lumineuse paraissant constante pour un observateur extérieur.

Les éléments lumineux 5 sont agencés suivant une matrice de lignes parallèles comprenant ici quatre lignes verticales et neuf lignes horizontales. Il est également envisageable de prévoir un dispositif de signalisation lumineux 1, par exemple de forme générale rectangulaire, et formé par un ensemble de support 2, de manière à obtenir un rayonnement d'intensité lumineuse sur une plage spécifique, notamment pour respecter les exigences imposées par certaines réglementations.

Le dispositif 1 comprend également un capteur photométrique 6 fixé au niveau du support 2, de façon adjacente aux éléments lumineux 5. En d'autres termes, le capteur photométrique 6 est fixé sur la face avant du support 2.

Le capteur photométrique 6 est fixé ici au niveau d'une ligne verticale entre deux éléments lumineux 5, et au niveau d'une ligne horizontale entre deux éléments lumineux 5. Le capteur photométrique 6 est disposé sur le support 2 sensiblement à un emplacement dédié pour un élément d'éclairage 5. En d'autres termes, une des lignes parallèles d'éléments lumineux 5 comprend un nombre réduit d'éléments lumineux 5 par rapport aux autres lignes parallèles.

Le capteur photométrique 6 est monté ici sensiblement au centre du support 2 de façon à recevoir une importante densité lumineuse réfléchie. Le capteur photométrique 6 peut être un phototransistor ou une photodiode

En fonctionnement, les rayonnements lumineux issus des éléments lumineux 5 sont émis vers l'extérieur du dispositif 1 en traversant le capot 4, pour rendre plus visible l'aéronef sur lequel le dispositif 1 est monté. Une partie des rayons lumineux est réfléchie par ledit capot 4 en direction du capteur photométrique 6 pour détecter l'intensité lumineuse émise par les éléments lumineux 5, le capteur 6 étant positionné sur le support 2 de façon à recevoir une importante intensité lumineuse réfléchie correspondant approximativement à cinq pour cent du rayonnement émis. On notera qu'il est également envisageable de prévoir de monter plusieurs capteurs photométriques 6 sur le support 2 pour détecter un grand nombre de rayons réfléchis afin d'améliorer la précision de la mesure.

Le capot 4 permet non seulement la transmission des rayons lumineux issus des éléments lumineux 5, ledit capot 4 étant positionné dans la direction d'émission des éléments, mais permet également la réflexion d'une partie de ces rayons lumineux en vue de la détection d'une éventuelle anomalie du dispositif. Dans ces conditions, le capot 4 constitue un unique moyen de réflexion. La portion du capot 4 formant moyen de réflexion est montée du côté des éléments lumineux 5, en considérant le support 2. Le capot 4 est donc en regard des éléments lumineux 5

En variante, il est également envisageable de prévoir un élément de réflexion spécifique de la lumière émise par les éléments lumineux 5 monté entre le capot 4 et le support 2, permettant de s'affranchir d'impuretés pouvant éventuellement se déposer sur le capot 4, notamment dans le cas d'une étanchéité défectueuse du carter de protection translucide (non représenté) à l'intérieur duquel est monté le dispositif 1. En effet, un tel dépôt peut engendrer un dysfonctionnement de la détection en générant notamment une augmentation de la réflexion des rayons lumineux issus des éléments lumineux 5.

La valeur mesurée du rayonnement détecté par le capteur photométrique 6 est transmise à un module de sortie 7 fixé sur un côté du support 2 et relié au capteur photométrique 6. Le module de sortie 7 est apte à élaborer un signal représentatif de la grandeur mesurée par le capteur photométrique 6 et à transmettre ledit signal, par l'intermédiaire d'une connexion 8 à un bloc de traitement 21 de signaux. Il peut être envisageable de concevoir un module de sortie 7 à l'intérieur duquel est monté le bloc 21.

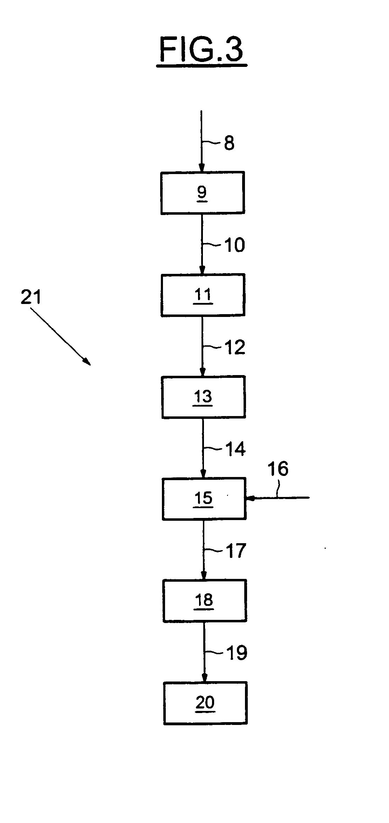

Comme illustré à la figure 3, le bloc de traitement 21 comprend un élément de filtrage 9 recevant, par l'intermédiaire de la connexion 8, la valeur du rayonnement détecté par le capteur photométrique 6 (figure 1). En effet, l'éclairement détecté par le capteur photométrique 6 comprend des composantes issues de la réflexion sur le capot 4 du rayonnement émis par les éléments lumineux 5, de l'éclairement du soleil, de sources d'éclairage extérieures au dispositif pouvant être monté sur l'aéronef, et de sources d'éclairage situées au sol.

L'élément de filtrage 9, tel qu'un filtre, permet de réaliser un filtrage de l'éclairement détecté par le capteur photométrique 6 centré sur la fréquence d'alimentation des éléments lumineux 5 de manière à éliminer les contributions parasites provenant de l'éclairement du soleil et des sources d'éclairage extérieures au dispositif 1 pouvant être détecté par le capteur photométrique 6.

Les données filtrées représentatives de l'éclairement détecté par le capteur photométrique 6, provenant principalement de la réflexion sur le capot 4 du rayonnement émis par les éléments lumineux 5, sont transmises par une connexion 10 à un module de traitement 11 apte à effectuer une amplification et un lissage desdites données, avant d'être transmises par une connexion 12 à un intégrateur 13.

L'intégrateur 13 permet d'obtenir une tension proportionnelle à l'intensité lumineuse du rayonnement émis par les éléments lumineux 5. Ladite tension est transmise par la connexion 14 à un comparateur 15 recevant également, par l'intermédiaire d'une connexion 16, une valeur de tension de référence V_{ref} correspondant à une intensité lumineuse de référence I_{ref}, pouvant être l'intensité lumineuse minimum requise par une réglementation. Le moyen de filtrage 9, le module de traitement 11, l'intégrateur 13 et le comparateur 15 forment ainsi un moyen de comparaison relatif d'une intensité lumineuse des éléments lumineux 5 avec une intensité lumineuse de référence.

Une première étape consiste alors à déterminer si la valeur de la tension représentative de l'intensité lumineuse émise par les éléments lumineux 5 est inférieure à la tension de référence V_{ref}. Si tel est le cas, une connexion 17 transmet une donnée représentative d'un signal d'alarme à un minuteur 18, transmettant par l'intermédiaire de la connexion 19 ladite donnée à un moyen de signalisation 20. Lorsque la durée pendant laquelle la tension représentative de l'intensité lumineuse des éléments lumineux 5 est inférieure à la tension de référence V_{ref} est supérieure à un temps prédéterminé, par exemple cinq minutes, un signal d'alarme est activé. Le moyen de signalisation peut être par exemple un avertisseur lumineux installé au niveau du cockpit de l'aéronef sur lequel le dispositif 1 est monté.

Bien entendu, il est possible de supprimer le minuteur 18, de manière à obtenir un signal d'alarme dès que l'intensité lumineuse des éléments lumineux 5 est inférieure à une intensité de référence. Toutefois, un tel minuteur 18 permet d'éviter que le dispositif 1 ne signale un dysfonctionnement des éléments lumineux 5 pouvant être dû à une défaillance ponctuelle desdits éléments lumineux 5.

Il est également envisageable de prévoir une plage de température d'utilisation pour laquelle le dispositif 1 peut être activé. En effet, lorsque le capteur photométrique 6 comprend un phototransistor, le signal détecté peut varier en fonction de la température environnante, ce qui peut générer un léger dysfonctionnement de la détection du dispositif 1 de signalisation. L'utilisation d'une photodiode peut permettre de s'affranchir d'éventuels problèmes d'utilisation à des températures basses ou élevées. D'une manière analogue, il est également envisageable de prévoir une inhibition de l'alarme en cas d'important éblouissement du soleil. En effet, dans le cas d'un éclairage du soleil dit « rasant », un fort éblouissement du soleil peut provoquer une saturation du dispositif 1.

Le dispositif de signalisation lumineux offre de nombreux avantages, parmi lesquels un détection de l'intensité lumineuse émise par les éléments lumineux pour déterminer particulièrement aisément une éventuelle défaillance desdits éléments lumineux.

## Revendications

1. Dispositif de signalisation lumineux, notamment destiné à être monté à bord d'un aéronef, comprenant une pluralité d'éléments lumineux (5) montés sur une face avant d'un support (2) et entourés d'un capot (4) translucide, un moyen de réflexion de la lumière émise par les éléments lumineux (5) disposé à proximité des éléments lumineux (5), au moins un capteur photométrique (6), et un moyen de comparaison relatif d'une intensité lumineuse détectée par le capteur photométrique (6) avec une intensité lumineuse de référence, **caractérisé par le fait que** le capteur photométrique (6) est positionné sur la face avant du support de façon adjacente aux éléments lumineux (5), le moyen de réflexion apte à réfléchir la lumière émise en direction dudit capteur photométrique (6) permettant également la transmission des rayons émis par les éléments lumineux (5) vers l'extérieur du dispositif.

2. Dispositif selon la revendication 1, dans lequel les éléments lumineux (5) comprennent des diodes électroluminescentes.

3. Dispositif selon la revendication 1 ou 2, dans lequel le moyen de réflexion est constitué par le capot translucide (4).

4. Dispositif selon la revendication 1 ou 2, dans lequel le moyen de réflexion est monté entre le capot translucide (4) et le support.

5. Dispositif selon l'une quelconque des revendications précédentes, dans lequel le capteur photométrique (6) comprend un phototransistor ou une photodiode.

6. Dispositif selon l'une quelconque des revendications précédentes, dans lequel le moyen de comparaison est relié à une sortie de signal du capteur photométrique (6), le moyen de comparaison comprenant un filtre, un amplificateur et un comparateur.

7. Dispositif selon l'une quelconque des revendications précédentes, comprenant des moyens d'information de l'évolution de l'intensité lumineuse des éléments lumineux.

8. Procédé de contrôle d'un dispositif de signalisation lumineux comprenant un ensemble de diodes électroluminescentes montées sur un support et recouvertes d'un capot translucide, dans lequel :
- on réfléchit la lumière émise par les diodes montées sur une face avant d'un support,
- on détecte un signal lumineux réfléchi par l'intermédiaire d'un capteur photométrique (6) positionné sur la face avant du support de façon adjacente aux diodes, et
- on compare l'intensité lumineuse des diodes par rapport à une intensité lumineuse de référence.

9. Procédé selon la revendication 8, dans lequel on filtre le signal lumineux réfléchi à la fréquence d'alimentation des diodes afin de comparer l'intensité lumineuse des diodes par rapport à l'intensité lumineuse de référence.

10. Procédé selon les revendications 8 ou 9, dans lequel on déclenche une alarme si l'intensité lumineuse est inférieure à l'intensité lumineuse de référence.

11. Procédé selon la revendication 10, dans lequel on déclenche l'alarme si l'intensité lumineuse est inférieure à l'intensité lumineuse de référence pendant une durée prédéterminée.

## Claims

1. Light signalling device, in particular intended to be mounted on board an aircraft, comprising a plurality of light elements (5) mounted on a front face of a support (2) and surrounded by a translucent cover (4), a means of reflecting the light emitted by the light elements (5) disposed near to the light elements (5), at least one photometric sensor (6), and a means of comparing a light intensity detected by the photometric sensor (6) with a reference light intensity, **characterized in that** the photometric sensor (6) is positioned on the front face of the support adjacent to the light elements (5), the reflection means for reflecting the light emitted in the direction of said photometric sensor (6) also being used to transmit the rays emitted by the light elements (5) towards the outside of the device.

2. Device according to Claim 1, in which the light elements (5) comprise light-emitting diodes.

3. Device according to Claim 1 or 2, in which the reflection means is formed by the translucent cover (4).

4. Device according to Claim 1 or 2, in which the reflection means is mounted between the translucent cover (4) and the support.

5. Device according to any one of the preceding claims, in which the photometric sensor (6) comprises a phototransistor or a photodiode.

6. Device according to any one of the preceding claims, in which the comparison means is linked to a signal output of the photometric sensor (6), the comparison means comprising a filter, an amplifier and a comparator.

7. Device according to any one of the preceding claims, including information means concerning the changes to the light intensity of the light elements.

8. Method of monitoring a light signalling device comprising a set of light-emitting diodes mounted on a support and covered by a translucent cover, in which:
- the light emitted by the diodes mounted on a front face of a support is reflected,
- a reflected light signal is detected via a photometric sensor (6) is positioned on the front face of the support adjacent to the diodes, and
- the light intensity of the diodes is compared with a reference light intensity.

9. Method according to Claim 8, in which the reflected light signal is filtered at the power supply frequency of the diodes in order to compare the light intensity of the diodes with the reference light intensity.

10. Method according to Claim 8 or 9, in which an alarm is triggered if the light intensity is less than the reference light intensity.

11. Method according to Claim 10, in which the alarm is triggered if the light intensity is less than the reference light intensity for a predetermined time.

## Patentansprüche

1. Lichtsignalgebungsvorrichtung, die insbesondere dazu vorgesehen ist, an Bord eines Flugzeugs angebracht zu werden, und mehrere Leuchtelemente (5), die an einer Vorderseite eines Trägers (2) montiert sind und von einer lichtdurchlässigen Haube (4) umgeben sind, ein Mittel zum Reflektieren des von den Leuchtelementen (5) ausgesendeten Lichts, das in der Nähe der Leuchtelemente (5) angeordnet ist, wenigstens einen photometrischen Sensor (6) sowie ein Mittel zum relativen Vergleichen einer von dem photometrischen Sensor (6) detektierten Lichtintensität mit einer Referenzlichtintensität umfasst, **dadurch gekennzeichnet, dass** der photometrische Sensor (6) an der Vorderseite des Trägers benachbart zu den Leuchtelementen (5) positioniert ist, wobei das Reflexionsmittel, das das in Richtung zu dem photometrischen Sensor (6) ausgesendete Licht reflektieren kann, außerdem den Durchgang der Lichtstrahlen ermöglicht, die von den Leuchtelementen (5) in die äußere Umgebung der Vorrichtung ausgesendet werden.

2. Vorrichtung nach Anspruch 1, wobei die Leuchtelemente (5) Leuchtdioden umfassen.

3. Vorrichtung nach Anspruch 1 oder 2, wobei das Reflexionsmittel durch die lichtdurchlässige Haube (4) gebildet ist.

4. Vorrichtung nach Anspruch 1 oder 2, wobei das Reflexionsmittel zwischen der lichtdurchlässigen Haube (4) und dem Träger montiert ist.

5. Vorrichtung nach einem der vorhergehenden Ansprüche, wobei der photometrische Sensor (6) einen Phototransistor oder eine Photodiode umfasst.

6. Vorrichtung nach einem der vorhergehenden Ansprüche, wobei das Vergleichsmittel mit einem Signalausgang des photometrischen Sensors (6) verbunden ist, wobei das Vergleichsmittel ein Filter, einen Verstärker und einen Komparator umfasst.

7. Vorrichtung nach einem der vorhergehenden Ansprüche, die Informationsmittel für die Entwicklung der Lichtintensität der Leuchtelemente umfasst.

8. Verfahren zum Steuern einer Lichtsignalgebungsvorrichtung, die eine Anordnung von Leuchtdioden umfasst, die an einem Träger montiert sind und mit einer lichtdurchlässigen Haube abgedeckt sind, wobei:
- das Licht, das von den an einer Vorderseite eines Trägers montierten Dioden ausgesendet wird, reflektiert wird,
- ein reflektiertes Lichtsignal durch einen photometrischen Sensor (6) detektiert wird, der an der Vorderseite des Trägers benachbart zu den Dioden positioniert ist, und
- die Lichtintensität der Dioden mit einer Referenzlichtintensität verglichen wird.

9. Verfahren nach Anspruch 8, wobei das reflektierte Lichtsignal bei der Versorgungsfrequenz der Dioden gefiltert wird, um die Lichtintensität der Dioden mit der Referenzlichtintensität zu vergleichen.

10. Verfahren nach den Ansprüchen 8 oder 9, wobei ein Alarm ausgelöst wird, falls die Lichtintensität kleiner als die Referenzlichtintensität ist.

11. Verfahren nach Anspruch 10, wobei der Alarm ausgelöst wird, falls die Lichtintensität während einer vorgegebenen Dauer kleiner als die Referenzlichtintensität ist.
